# EUROPEAN PATENT SPECIFICATION

(11) **EP 1 243 077 B1**
(45) Date of publication and mention of the grant of the patent: **27.07.2011**
(21) Application number: 00902521.4
(22) Date of filing: 02.02.2000
(51) Int. Cl.: H04B 1/12

(54) **MAINTAINING PERFORMANCE QUALITY OF BROADBAND SYSTEM IN THE PRESENCE OF NARROW BAND INTERFERENCE**
ERHALTUNG DER QUALITÄT EINES BREITBANDÜBERTRAGUNGSSYSTEMS IN GEGENWART VON SCHMALBANDSTÖRUNGEN
MAINTIEN DE LA QUALITE DE RENDEMENT D'UN SYSTEME A LARGE BANDE EN PRESENCE DE SIGNAUX BROUILLEURS A BANDE ETROITE

(30) Priority: 02.02.1999 CA 2260653
(43) Date of publication of application: 25.09.2002
(73) Proprietor: ISCO International, LLC, Evanston, IL 60201 (US)
(72) Inventor: JAGGER, Charles, E., Toronto, Ontario M2P 1W3 (CA); WILLETTS, Mark, N., Etobicoke, Ontario M8W 2X2 (CA); TOBIA, Micolino, Woodbridge, Ontario L4L 7H8 (CA)
(74) Representative: Jacoby, Georg
(86) International application number: PCT/CA2000/000100
(87) International publication number: WO 2000/046929

(56) References cited:
- EP-A- 0 704 986
- EP-A- 0 812 069
- US-A- 5 168 508

## Description

### BACKGROUND OF THE INVENTION

The present invention generally relates to wireless communications, and more particularly to use of notch filters to minimize the adverse affect of narrow band interference upon the performance of broadband systems.

### BACKGROUND DESCRIPTION

The worldwide market for wireless phone service is experiencing growth at an accelerated rate. It is well known that service reliability and performance are key competitive criteria in the telecommunications industry. Exiting and new 800 and 1900 MHz Code-Division Multiple Access (CDMA) wireless sites are in need of a solution to address problems caused by narrow band interfering signals, such as those generated by existing analog sites which continue to provide cellular coverage in urban and non-urban areas.

When deploying a CDMA telecommunications system within a frequency spectrum traditionally allocated to narrow band systems, such as the Analog Mobile Phone System (AMPS) or Global System for Mobile communications (GSM), a frequency block slightly wider than the bandwidth of the CDMA spectrum is normally cleared, in and around the geographic region of the CDMA coverage, to protect the CDMA system from narrow band interference and hence maintain the performance quality of the system. However, it is not always practicable or economical, and in some cases not possible, to clear all the required spectrum. An example where it may be impossible is in country or state boundary regions. Deleterious effects of narrow band interference on CDMA telecommunication systems include: an increase in blocked call and dropped call rates, disruption of the RF power control system, increase in average mobile station power consumption, reduction of cell capacity, and shrinkage of cell site coverage area. In the worst case, a high level interferor can jam the entire cell or sector, blocking all CDMA communications which would normally be routed through the location.

The use of adaptive notch filters in communications is not new. U.S. Patent No. 3,911,366 to Baghdady describes a frequency demodulation receiver for separating a stronger and weaker signal, and removing the undesired signal. Baghdady's invention employs a first mixer, a bandpass filter with a fixed tuned trap (notch), and a second mixer, to achieve a frequency variable notch filter. This filter bears some similarities to the frequency variable notch filter employed in this invention, however, Baghdady addresses only two FM signals and does not address scanning of a broadband signal for multiple narrowband interferors or tracking such interferors and notching them after acquisition.

U.S. Patent No. 4,027,264 to Gutleber describes a system that scans over the spectral range of an intelligence bearing signal and locks onto and tracks the interfering signal. But the interfering signal is excised by generating a replica and subtracting that replica from the intelligence bearing signal.

U.S. Patent No. 5,307,517 to Rich describes an improved adaptive notch filter for removing undesired cochannel FM interference, using an approach similar to that employed by Baghdady. The incoming signal is frequency translated to baseband signals and sent through a high pass filter.

U.S. patent No. 5,263,048 to Wade describes a method for excising narrowband interferors in a spread spectrum signal, wherein the incoming signal is digitized and transformed to the time domain and then the amplitude of the signal is discarded and replaced with a normalized value.

U.S. Patent No. 5,703,874 to Schilling describes a spread spectrum CDMA communications system for operation within the same geographic region as occupied by a mobile-cellular system, the spectrum of which overlays the operating frequency of the mobile-cellular system. In this invention, the base station employs a comb filter for attenuating predetermined channels of the mobile-cellular system. It does not seek and attenuate narrowband transmissions at arbitrary frequencies and occurrences.

European Patent Application No EP 0704986 A2 describes a CDMA receiver for receiving spread-spectrum-modulated signal, wherein a multi-carrier signal processor is positioned. The multi-carrier signal processor includes a controller for analysing an incoming multi-carrier signal. At least one signal modifier communicates with the controller such that the controller directs the signal modifier to attenuate at least one carrier signal which is not spread-spectrum-modulated. The document does not describe deriving an adaptive threshold value based on the multi-carrier signal.

European Patent Application 08122069 A2 discloses a dual-mode cellular telephone system which is capable of suppressing a narrow-band disturbing signal appearing in a mobile station of a dual-mode cellular telephone system adapted to an analog system and digital CDMA system. The system disclosed in D2 includes a receiving portion and a level detecting circuit which monitors an output level of the receiving portion and, only in the case of the output level exceeding a previously determined reference level, controls the notch filter to possess the specific notch characteristic. D2 does not disclose determining the reference level used by the notch filter based on the power levels of narrowband interference signals.

U.S. Patent No. EP 5,168,508 describes a spread spectrum receiver, in which a spread spectrum received signal is separated into at least 3 frequency band channels; signal components in the different channels are compared in the magnitude; and the signal components in the different frequency bands are combined after having attenuated greater ones, in order to eliminate interference waves from the inputted signal. It does not seek to suppress narrowband interferences using an adaptive threshold value.

The invention provides a device for suppressing narrow band interference in a wideband telecommunications system. Means are provided for rapidly analyzing the wide frequency band with respect to signal power levels in specified narrow frequency bands and detecting narrow band signal power levels received within the specified bands. There is shown how to derive an average composite wideband power level from signal power levels in the specified narrow bands, and then how to use these signal power levels to derive an adaptive threshold for identifying the narrow band interference. Finally, means are provided for setting one or more notch filters for suppressing the identified narrow band interference.

In accordance with the invention as applied to wideband CDMA systems, the spectrum used by the wideband CDMA signal (e.g. having a band of .2288 MHz) is frequency scanned for narrowband analog AMPS signals (e.g. having a band of 30 KHz). An identified frequency band is then assigned to a notch filter and excised. The notch filter is preferably implemented, not as a tunable filter, but rather as a narrowband notch centered at a fixed intermediate frequency (IF). The input broadband radio frequency (RF) signal is shifted by a tunable local oscillator (LO) to place the detected interfering signal within the bandwidth of the notch. The effective center frequency of the notch is thus set by tuning the LO.

In addition, the interference detection function may be performed by a scanning FM receiver in cases where the carrier frequency and bandwidth of the interference are known in advance. For example, if the interferers are assumed to be AMPS cellular telephones, it is known to scan channels spaced in 30 kHz increments from 824 to 849 MHz.

A notable feature of the invention is that this process is fast -- in contrast to more generic methods of filtering which take more time to be effective -- and appears to a telecommunications user as no more than a brief "click" in reception, if at all, and excises the interferor quickly enough to prevent or greatly reduce the probability of the occurrence of a blocked or dropped call due to the interference.

A further notable feature of the invention is that additional notch filters may be added to allow removal of multiple interferors. In a preferred embodiment of the invention, responsive to an environment where there are more interferors than notch filters, those interferors with the largest amplitude are assigned to the notch filters.

The present invention solves or mitigates the problem of narrow band interference in a manner which is less expensive and more convenient than other methods, and in some cases can complement other methods. The most common alternate method is to employ an Adaptive Antenna Array at the base station or mobile station. These systems are expensive and complex, and require installation of tower top antennas and other equipment.

The present invention requires minimal alteration of existing base station equipment and software. Installation is simple and is not time consuming, and may be accomplished without specialized personnel because it merely requires connecting a device in the receiver RF signal path, preferably after the Low Noise antenna (LNA). The invention dynamically detects, tracks and filters the interfering signals with sufficient speed and fidelity to eliminate or greatly reduce the deleterious effects of narrow band interfering signals on the CDMA link.

The solution requires the installation of one Adaptive Notch Filter (ANF) unit on at least one of the CDMA receivers located at each cell site. When inserted in an RF signal path the ANF detects narrow band interferors above a threshold level within the CDMA signal, and then automatically acquires and suppresses the interferors. This is achieved by electronically placing a rejection notch at the frequency of the interferors. Multiple interferors may be simultaneously suppressed depending upon the number of notch filter modules installed in the equipment.

The invention enables continuous scanning of a preset excision band to detect interferors. In the absence of interferors a bypass mode is selected allowing the RF signal to bypass the notch. Upon detection, the interferor is acquired and in accordance with the invention a switch is made to a suppression mode where the interferor is steered through the first notch section and suppressed. Multiple interferors are sorted according to level and the highest level interferors are selected and suppressed, up to the number of cascaded notch filters. Alternatively, an external control line may be used to select the bypass mode so that the signal is allowed to pass the notch section, regardless of interferor content.

The invention implements a rapid functional test which has sufficient operational alarms and metrics to allow an operator, either locally or remotely through an RS232 interface, to determine the characteristics of the interferors and averaged received composite CDMA power level. Another aspect of the invention is modular construction which allows the rapid removal and replacement of functional circuit elements, i.e. power conditioner, scanner, notch filter, and operational alarms and metrics modules. The invention comprises all four modules, but may readily be expanded by the addition of notch filter modules. At a practical level, of course, if there are a large number of interferors and all of them are notched, there is a point at which there is not enough energy left in the desired signal to be decoded. While the disclosed method is specifically adapted for base station interference control, it can also be adapted to the mobile unit.

Furthermore, the invention is applicable to a variety of environments where a wideband system looks upon narrowband signals as interferors which must be excised in order to preserve the performance quality of the wideband system. The description herein uses Advanced Mobile Phone Service (AMPS) as the source of narrowband signals, but the invention applies equally to other comparable narrowband sources such as Total Access Communication System (TACS), Nordic Mobile Telephone (NMT), or GSM (the European Global System for Mobile communications).

In addition, the invention may be applied to a variety of broadband signalling components. Although the system described in detail herein uses CDMA as a broadband signalling format in a cellular telecommunications system, systems which use other types of spread spectrum carriers, such as direct sequence and frequency hopped signals used in wireless local area networks (W-LANs), point-to-point or multicast carriers such as Local Multiport Distribution Service (LMDS) systems can also benefit from the implementation of the invention.

### BRIEF DESCRIPTION OF THE DRAWINGS

The foregoing and other objects, aspects and advantages will be better understood from the following detailed description of a preferred embodiment of the invention with reference to the drawings, in which:
Figure 1 is a graphical representation of the spectrum of a spread spectrum signal.
Figure 2 is a graph showing a spread spectrum signal plus a narrowband interferor.
Figure 3 is a graph showing a spread spectrum signal after interferor excision.
Figure 4 is a block diagram showing the operation of a notch filter.
Figure 5 is a block diagram of a notch filter module in accordance with the invention.
Figure 6 is a modification of Figure 5, adapting the invention for use with multiple notch filters where AMPS signals are interferors of CDMA signals.

### DETAILED DESCRIPTION OF A PREFERRED EMBODIMENT OF THE INVENTION

While the concept of employing a notch filter in CDMA communications is not new, the present invention employs an interference tracking system with multiple notch filters. The detection and tracking function of the invention is adapted to provide a number of features and attributes which arc advantageous. First, the invention employs a single fast acting scanner and detector which detects and records all the narrowband channel received signal levels within the CDMA spectrum, and derives the average composite CDMA power. Using this power measurement, an adaptive threshold is derived for detecting the presence of narrowband interference. This threshold varies as the composite received CDMA power varies. Such an adaptive threshold has an advantage over a fixed one, since a fixed threshold may result in false detection of interference when the composite received CDMA power is relatively high.

Second, the largest N channels having levels which exceed the adaptive threshold are identified for setting N cascaded notch filters. The detector features hysteresis, where the ON threshold is set higher than the OFF. This reduces the degree of on/off "chattering" of the notch filter switching function. The received signal level of a mobile interferor will fluctuate due to multipath, therefore, to avoid undesirable switching on and off of the associated notch filter, a count of the consecutive number of times the signal goes below the OFF threshold is made, and the notch filter is switched out only when a predetermined number has been exceeded. Third, the entire process of scanning, identifying interfering signals, and setting the notch filters is accomplished within a time period which is less than one IS-95 CDMA data frame period (20ms). This minimizes the disruption of the power control system by limiting the escalation of mobile power in an attempt to overcome the interference, and eliminates or greatly reduces the probability that a call will be blocked or dropped due to the interference. The ability of the invention to operate within this time period is due in part to the fact that the narrow band interferors are known to occur in specified narrow frequency bands, e.g. the bands associated with AMPS, which therefore can be discretely assigned to notch filters.

The invention can optionally provide the following useful information to the cellular system manager: time of occurrence, frequency, and duration of interfering signal presence. In addition, periodic records can be made of the composite received CDMA power level. Also, a laptop or personal computer can collect and process channel level data transmitted from the notch filter system and graphically display the CDMA and guard band spectrum, for base station service personnel and engineers.

Furthermore, the scanner and detector can be designed to detect the presence of frequency hopped GSM signals and concurrently dehop multiple GSM interferors, transmitting the appropriate frequency hopping sequence to each of the notch filters.

The notch filtering function of the invention is adapted to provide several advantageous performance attributes. First, several notch filters can be cascaded to handle the degree of interference experienced. Time to acquire and notch interfering signals is not directly proportional to the number of interfering signals, and in fact increases negligibly with the number of interferors.

Second, each notch filter module consists of a first mixer, a local oscillator (LO), a bandpass filter and notch filter at an intermediate frequency (IF), and a second mixer. The effective center frequency of the notch frequency is set by tuning the LO.

Third, each notch filter module also features an RF bypass switch to bypass the RF signal when notching is not required, and the notch filter system has a fail-safe bypass RF switch to bypass the system in the event of power loss or other failure modes in the system.

Fourth, each notch filter module provides unity gain, and the overall gain of the adaptive notch filter system is unity. This facilitates the modularity of the system, since notch filter modules can be installed or removed, or switched in or out, or the entire adaptive notch filter system can be bypassed, removed, or reinstalled, without changing receiver RF gain. Modularity is further facilitated by setting the bypass delay approximately equal to the notch module delay.

Fifth, the control module senses the number of and position of notch modules that are present and operational, and adjusts the control algorithm accordingly.

Sixth, the total absolute delay in the cascaded notch filter path is limited to a value which does not result in unanticipated hand-offs due to associated increases in mobile to base station distance estimates.

Optionally, the notch module can demodulate the narrowband FM interferor and use this signal to modulate the notch module LO, thus tracking the interferor. This technique can be used to reduce the complexity of the notch filter design or avoid excessive filtering of the CDMA signal, since the effective filter bandwidth adapts to the spectral width of the interferor. It allows the use of notch filters of substantially narrower band than the interferor spectrum. This technique is applicable to CDMA overlay on GSM, since the GSM channel is much wider than the AMPS channel (200 kHz vs 30 kHz).

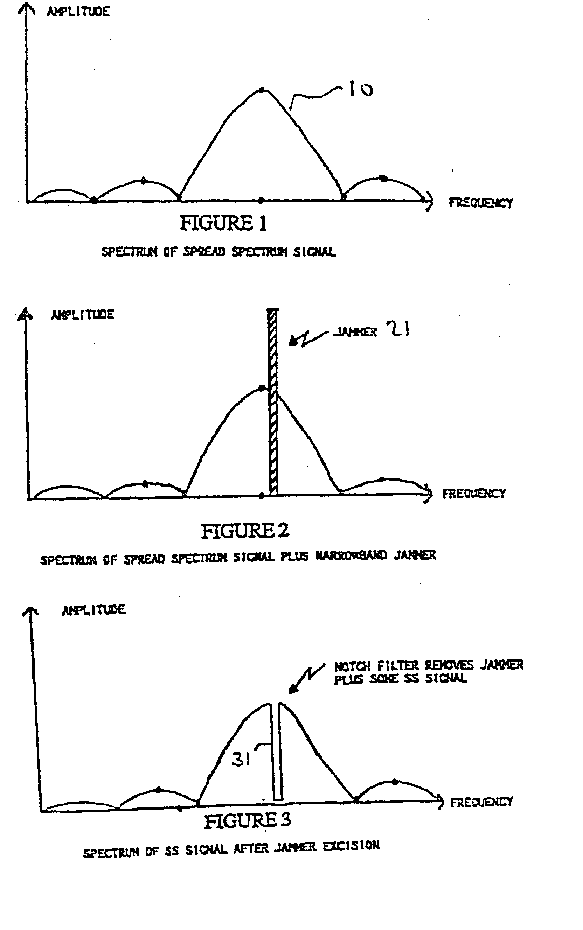

The spectrum of a spread spectrum signal 10 is shown in Figure 1. The basic problem addressed by a notch filter is that this broadband or spread spectrum signal 10 and a narrow band interferor signal 21 occupy the same band, as shown in Figure 2. If the strength of the narrow band interference 21 is such that it exceeds the signal to jamming ratio of the spread spectrum signal 10, it is capable of deteriorating or eliminating any communication being made in the spread spectrum system.

If on the other hand, the summed signals of Figure 2 are passed through a notch filter located at the frequency of the narrow band signal 21 (with a resulting notch 31 as shown in Figure 3) communication is restored, although there will be deterioration of communication to a degree proportional to the amount of energy removed from the spread signal by the notch filter. That energy removal is a residual interference not eliminated by the notch filter.

Obviously, the interference can occur anywhere in spread spectrum (SS) band, and it is desirable that the notch filter be tuneable, i.e. that the notch filter be locateable at any frequency on the band where there is a interferor. Notch filters tuneable over a wide band while maintaining consistent attenuation characteristics are very difficult, if not impossible to implement. Rather, it is much more feasible to design narrow band notch filters with high Q elements (Xtals, SAWS, HELICAL FILTERS, etc.) at particular fixed frequencies.

The shape of the notch filter may be matched to complement the expected interference. For example, if the interference expected is an AMPS signal, the filter can be implemented with an amplitude response characteristic matched to the FM modulation defined by the AMPS standard.

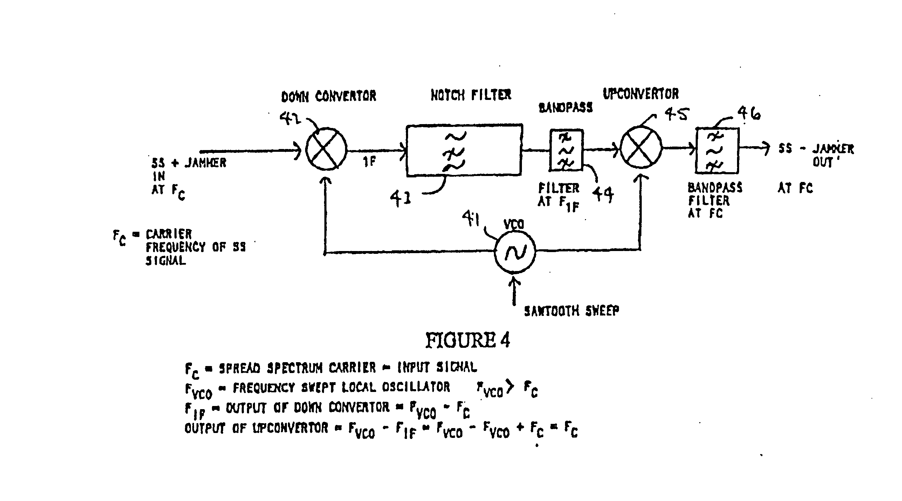

Turning now to Figure 4, the tuning action required is achieved by sweeping the spread spectrum signal past the fixed notch and subsequently stopping this sweep when the interfering signal is detected. The sweeping action is obtained through the use of a voltage controlled local oscillator 41 and down converter 42. The SS signal is at an intermediate frequency where it is convenient and economical to realise the notch filter 43. After removal of the interferor by the notch filter 43, the resulting "cleaned up" SS signal is returned to its original frequency by the up converter 45 using LO 41.

The addition of a bandpass filter 44 centered at the IF and somewhat greater in bandwidth than the sweep range of the VCO 41 and the bandwidth of the SS signal is used to select the lower sideband of the down conversion process. Similarly, another band pass filter 46 is used at the output of the up converter to again select the lower sideband of the mixing process. As may be readily seen, the upper sidebands of the respective conversions may also be chosen, as can a choice of F_{vco} < F_{c}, with equally valid results. The particular selection of F_{vco} > F_{c} eases the realisation of the filtering requirements.

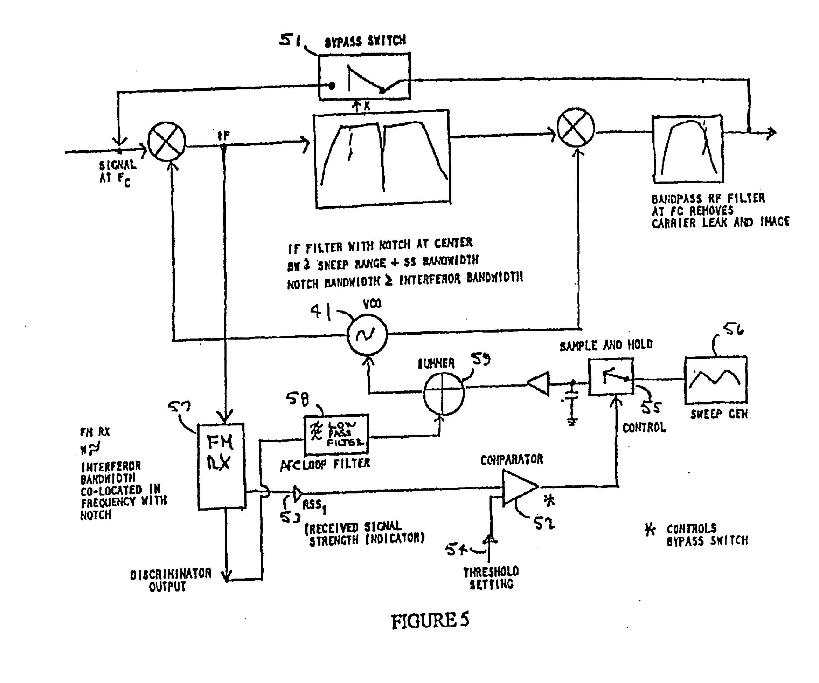

As yet missing from the process is of course the means by which the VCO sweep is halted at the correct frequency that places the interferor in the notch filter. This function is provided by an adaptation of a signal scanning or searching receiver 57 as shown in Figure 5. This scanning receiver is comprised of a narrow band, single conversion FM detector with a received signal strength indicator (RSSI) 53. The FM detector is used to receive narrowband signals at exactly the same frequency as that of the notch filter. Thus, when an interfering signal is present it is detected and its amplitude level is determined by the RSSI voltage. The RSSI voltage 53 is subsequently compared to some preset threshold 54. The resultant comparator output 52 is used to halt the sweep driving the VCO 41. Simple sample and hold circuitry 55 clamps the DC value of the sawtooth generator 56 sweeping the VCO 41 and correspondingly sets the VCO 41 at the appropriate frquency to receive the interfering signal; and thereby the VCO 41 sets the effective notch filter to excise the interfering signal from the SS signal. Inclusion of discriminator 57 in the scanner output allows an AFC (Automatic frequency control) loop 58 to be closed, including the VCO 41. This maintains the notch position as long as the jamming is present. The loop parameters when appropriately chosen also allow the notching action to track FM signal deviations.

A realisation of the overall circuit appears as in Figure 5, which can be considered as a module for the removal of one narrow band interferor. Note that the bypass switch 51 has been added to preclude any signal deterioration when no jamming is present. This is controlled by the opposite state to the activated comparator 52. Up to a reasonable point, these modules can be cascaded to remove a number of interferors. This "reasonable point" is related to the bandwidth of the notch filter (i.e. the amount of signal energy removed from the spread spectrum increases with the addition of each notch) and the practical problems of intermodulation products that are generated with a large number of interferors.

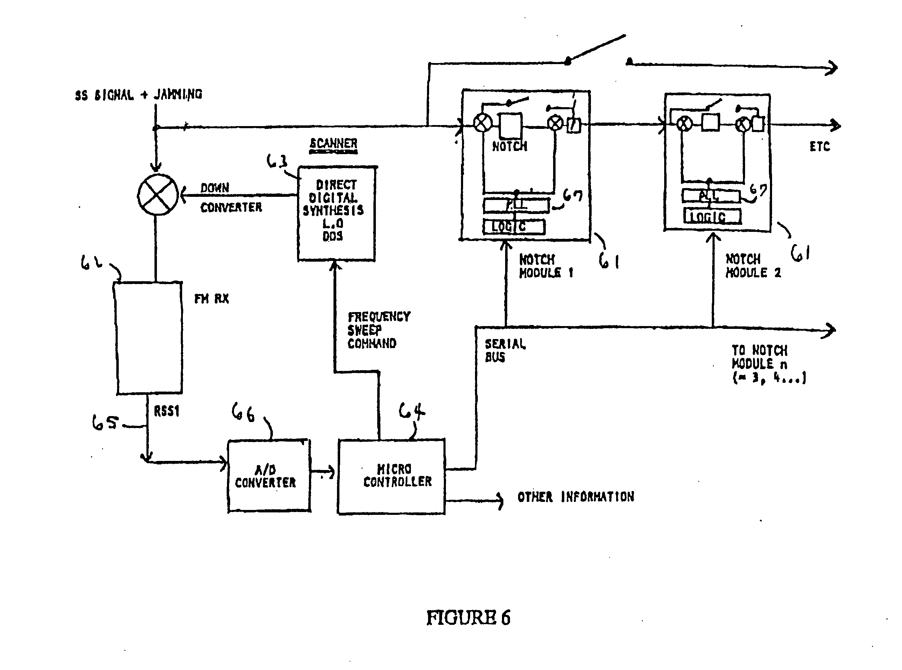

Figure 6 is a modification of Figure 5, intended for use in cellular base stations, located in areas where AMPS signals are received and co-located in the band of CDMA signals. The individual notch modules 61 perform the same function as described previously, however they do not contain an FM receiver or a swept VCO. This detection function is now handled in a scanning FM receiver 62. It will be noted that removal of the receiver from each of the notch modules does not permit a frequency tracking function to be obtained. However, because the parameters of the potential interferors (AMPS) are known in both frequency and bandwidth, this capability is not required.

In Figure 6, the direct digital synthesiser (DDS) local oscillator 63 repeatedly tunes the narrow band FM receiver 62 through the CDMA band and in AMPS channel steps (i.e., 30 KHz steps from 824 to 849 MHz), each step being generated by a digital word sent to the DDS from a microcontroller 64. The RSSI output 65 of the FM receiver provides a voltage proportional to the power (in dB) in each of the signal channel. This RSSI voltage in analogue to digital converted (at A/D Converter block 66) and stored for processing in microcontroller 64. The RSSI level is compared to a notch filter ON threshold, and if it exceeds it, a notch filter is assigned to the channel, if one is available. If all notch filters are in use, the RSSI level is compared to the lowest level of the notched interferors, and if it exceeds this value, the frequency of this notch will be changed to the new channel. The notch filter center frequency is modified by sending a control word to a phase lock loop (PLL) 67 that sets up the proper LO frequency for the down and up conversions in each notch module. This LO generated by the PLL 67 through the information from the microprocessor 64, places the notch at the appropriate frequency to excise the AMPS channel.

The threshold setting 54 (notch filter ON threshold) can be an adaptive threshold determined from the results of the tuning the narrowband FM receiver 62 through the CDMA band. In particular, the stored RSSI voltages can be processed by the microcontroller 64 to determine an average composite power level for the spread spectrum signal 10. This composite estimate level is then used as a reference in determining the threshold setting, such as by adding a constant 10 or 15 dB increment to the calculated average signal level. The estimate for the composite power level for the spread spectrum signal can be improved by, for example, not counting the strongest three RSSIs in the calculation.

A prioritising function, in the microcontroller 64 software, selects those signals, for elimination by the notch modules G1, which arc the strongest and capable of doing the most damage to the composite CDMA signal. Although the number of notch modules 61 which can be used is limited only by the practical considerations of economics and signal path distortions, the number should be matched statistically to the potential threat. The weaker signals that are not notched, if they are not contained by the jamming margin of the CDMA signal, will be ameliorated by the power control link between the base station and the mobile.

Here the base station circuits determine an increase in errors of the received signal and send a command signal to the mobile transmitter to increase its power.

The microprocessor 64, in addition to its duties for the notching actions, senses equipment faults enabling a bypass mode should a fault occur. Also, provided is a built in test equipment (BITE) function and a means of averaging the RSSI outputs over the whole CDMA spectrum to assess the received power level of the latter. The data thus obtained is used for threat analysis, signal analysis and housekeeping functions. These are made available locally at the base station and remotely.

While the invention has been described in terms of a single preferred embodiment, those skilled in the art will recognize that the invention can be practiced with modification within the scope of the appended claims.

## Claims

1. A device for suppressing narrow band interference (21) in a wideband telecommunications system, said system being operable in a wide frequency band (10), comprising:
means for rapidly analyzing said wide frequency band (10) with respect to signal power levels in specified narrow frequency bands (21) of the wide frequency band and detecting said narrow band signal power levels received within said specified bands;
means for deriving an average composite wideband power level from said narrow band signal power levels by determining an average power level of at least some of said narrow band signal power levels;
means for using said average composite wideband power level to derive an adaptive threshold for identifying said narrow band interference; and
means for setting one or more notch filters (43) for suppressing said identified narrow band interference.

2. The device of claim 1, wherein said wideband system is a CDMA system and said specified frequency bands are determined from an AMPS system.

3. The device of claim 2, wherein said analysis means, said deriving means, said identifying means and said setting means all are accomplished within one CDMA data frame period.

4. The device of claim 1, wherein said detecting means is adapted to detect the presence of frequency hopped GSM signals and concurrently dehop multiple GSM interferors by transmitting the appropriate frequency hopping sequence to each of said notch filters.

5. The device of claim 1, wherein said notch filter (43) comprises:
a first mixer (42);
a voltage controlled oscillator (41);
a narrowband fixed frequency filter (44); and
a second mixer (45),
wherein said first mixer (42) and said voltage controlled oscillator (41) heterodyne a radio frequency signal to an intermediate frequency signal, said intermediate frequency signal then being both notch filtered and bandpass filtered, wherein said second mixer (45) translates said filtered signal back to said radio frequency.

6. The device of claim 5, wherein said notch filter (43) is bypassed by means of a radio frequency switching circuit (51) when no interferor is detected, wherein said switching circuit (51) has a switching threshold which is higher for switching in the notch filter (43) than for bypassing the notch filter (43).

7. A method for suppressing narrow band interference (21) in a wideband telecommunications system, said system being operable in a wide frequency band (10), the method comprising the steps of:
rapidly analyzing said wide frequency band (10) with respect to signal power levels in specified narrow frequency bands (21) of the wide frequency band and detecting said narrow band signal power levels received within said specified bands;
deriving an average composite wideband power level from said narrow band signal power levels by determining an average power level of at least some of said narrow band signal power levels;
using said average composite wideband power levels to derive a threshold for identifying said narrow band interference; and
setting a notch filter (43) for suppressing said identified narrow band interference.

8. The method of claim 7, wherein said wideband system is a CDMA system.

9. The method of claim 8, wherein said analyzing step, said deriving step, said identifying step and said setting step all are accomplished within one CDMA maximum permissible frame delay period.

10. The method of claim 7, wherein said wideband system is a spread spectrum system.

11. The method of claim 10, wherein said wideband system is a wireless local area network system.

12. The method of claim 10, wherein said wideband system is a local multipoint distribution service type system.

13. The method of claim 7, wherein said specified frequency bands are determined from an AMPS system.

14. The method of claim 7, wherein said specified frequency bands are determined from a TACS system.

15. The method of claim 7, wherein said detecting step comprises the additional step of:
selectively detecting a presence of frequency hopped GSM signals and concurrently dehoping multiple GSM interferors, and transmitting the appropriate frequency hopping sequence to said notch filter (43).

16. The method of claim 7, wherein the step of deriving an average composite wideband power level comprises the additional steps of:
selecting a predetermined number of the strongest narrowband signal power levels; and
not including the said predetermined number of the strongest narrowband signal power levels in a derivation of the average composite wideband power level.

17. The method of claim 7, wherein the step of using said average composite wideband power levels to derive a threshold comprises the additional step of:
adding a predetermined offset to the average composite wideband power level to derive the threshold.

18. The method of claim 7, wherein the step of rapidly analysing said wide frequency band comprises the additional step of:
stepping a narrowband receiver across the wide frequency band (10) in frequency increments associated with each of a number of channel frequencies associated with narrow band transmitters expected to be operating within the wide frequency band (10).

19. The method of claim 18, wherein the expected narrow band transmitters are AMPS cellular telephones and the frequency increments are 30 kHz.

20. The method of claim 19, wherein the narrowband receiver provides at least a receive signal strength indication (RSSI) output for the narrow band channel, and the RSSI is used to determine the narrow band signal power levels.

21. The method of claim 7, wherein the notch filter (43) has an amplitude response characteristic which matches an expected amplitude characteristic of the narrowband interference (21).

22. The method of claim 7, wherein the step of setting a notch filter (43) additionally comprises the steps of:
downconverting a radio frequency (RF) signal containing the wide frequency band to an intermediate frequency (IF) signal, the frequency shift of the downconversion depending upon a radio frequency of said narrow band interference;
filtering said IF signal with a narrow band fixed frequency notch filter (43), to produce a notch filtered IF signal; and
upconverting said notch filtered IF signal to produce an output RF signal, the frequency shift of the upconversion depending upon said frequency of said narrow band interference, the output RF signal being returned to a radio frequency again coincident with said original radio frequency of said wide frequency band (10).

23. The method of claim 22, wherein said narrow band fixed frequency notch filter (43) has a notch width corresponding to a bandwidth of an expected narrow band transmitter which causes the narrow band interference.

24. The method of claim 7, wherein the wide frequency band (10) is at least about one-half as wide as the narrow band interference (21).

25. The method of claim 7, comprising the additional step of:
setting multiple notch filters (43) in a cascaded arrangement, where a given notch filter (43) output in the cascade feeds an input of a next notch filter (43) in the cascade, the multiple notch filters each being tuned to suppress a given one of a corresponding multiple instances of narrow band interference (21).

## Patentansprüche

1. Einrichtung zum Unterdrücken einer Schmalbandstörung (21) in einem Breitband-Telekommunikationssystem, wobei das System in einem breiten Frequenzband (10) betreibbar ist, umfassend:
ein Mittel zum schnellen Analysieren des breiten Frequenzbands (10) in Bezug auf Signalleistungspegel in spezifizierten schmalen Frequenzbändern (21) des breiten Frequenzbands und zum Detektieren der innerhalb der spezifizierten Bänder empfangenen Schmalband-Signalleistungspegel;
ein Mittel zum Ableiten eines durchschnittlichen zusammengesetzten Breitband-Leistungspegels aus den Schmalband-Signalleistungspegeln durch Ermitteln eines durchschnittlichen Leistungspegels wenigstens einiger der Schmalband-Signalleistungspegel;
ein Mittel zum Verwenden des durchschnittlichen zusammengesetzten Breitband-Leistungspegels, um eine adaptive Schwelle zum Identifizieren der Schmalbandstörung abzuleiten; und
ein Mittel zum Setzen eines oder mehrerer Kerbfilter (43) zum Unterdrücken der identifizierten Schmalbandstörung.

2. Einrichtung nach Anspruch 1, bei der das Breitbandsystem ein CDMA-System ist und die spezifizierten Frequenzbänder von einem AMPS-System bestimmt werden.

3. Einrichtung nach Anspruch 2, bei der das Analysemittel, das Ableitmittel, das Identifiziermittel und das Setzmittel alle innerhalb einer CDMA-Datenrahmenperiode ausgeführt werden.

4. Einrichtung nach Anspruch 1, bei der das Detektiermittel dazu ausgelegt ist, das Vorliegen von Frequenzsprung-GSM-Signalen zu erkennen und gleichzeitig einen Rücksprung mehrerer GSM-Störer zu veranlassen durch Senden der geeigneten Frequenzsprungsequenz an jedes der Kerbfilter.

5. Einrichtung nach Anspruch 1, bei der das Kerbfilter (43) umfasst:
einen ersten Mischer (42);
einen spannungsgesteuerten Oszillator (41);
ein Schmalband-Festfrequenzfilter (44); und
einen zweiten Mischer (45),
wobei der erste Mischer (42) und der spannungsgesteuerte Oszillator (41) ein Funkfrequenzsignal und ein Zwischenfrequenzsignal überlagern, wobei das Zwischenfrequenzsignal dann sowohl kerbgefiltert als auch bandpassgefiltert wird, wobei der zweite Mischer (45) das gefilterte Signal zurück auf die Funkfrequenz überträgt.

6. Einrichtung nach Anspruch 5, bei der das Kerbfilter (43) mittels eines Funkfrequenzschaltkreises (51) umgangen wird, wenn kein Störer erkannt wird, wobei der Schaltkreis (51) eine Schaltschwelle aufweist, die höher für das Einschalten des Kerbfilters (43) ist als für das Umgehen des Kerbfilters (43).

7. Verfahren zum Unterdrücken einer Schmalbandstörung (21) in einem Breitband-Telekommunikationssystem, wobei das System in einem breiten Frequenzband (10) betreibbar ist, wobei das Verfahren die folgenden Schritte umfasst:
schnelles Analysieren des breiten Frequenzbands (10) in Bezug auf Signalleistungspegel in spezifizierten schmalen Frequenzbändern (21) des breiten Frequenzbands und Detektieren der innerhalb der spezifizierten Bänder empfangenen Schmalband-Signalleistungspegel;
Ableiten eines durchschnittlichen zusammengesetzten Breitband-Leistungspegels aus den Schmalband-Signalleistungspegeln durch Ermitteln eines durchschnittlichen Leistungspegels aus wenigstens einigen der Schmalband-Signalleistungspegel;
Verwenden der durchschnittlichen zusammengesetzten Breitband-Leistungspegel, um eine Schwelle für das Identifizieren der Schmalbandstörung abzuleiten; und
Setzen eines Kerbfilters (43) zum Unterdrücken der identifizierten Schmalbandstörung.

8. Verfahren nach Anspruch 7, bei dem das Breitbandsystem ein CDMA-System ist.

9. Verfahren nach Anspruch 8, bei dem der Analysierschritt, der Ableitschritt, der Identifizierschritt und der Setzschritt alle innerhalb einer maximal zulässigen CDMA-Rahmenverzögerungsperiode ausgeführt werden.

10. Verfahren nach Anspruch 7, bei dem das Breitbandsystem ein Spreizspektrum-System ist.

11. Verfahren nach Anspruch 10, bei dem das Breitbandsystem ein drahtloses lokales Netzsystem ist.

12. Verfahren nach Anspruch 10, bei dem das Breitbandsystem ein System vom Local Multipoint Distribution Service-Typ ist.

13. Verfahren nach Anspruch 7, bei dem die spezifizierten Frequenzbänder von einem AMPS-System bestimmt werden.

14. Verfahren nach Anspruch 7, bei dem die spezifizierten Frequenzbänder von einem TACS-System bestimmt werden.

15. Verfahren nach Anspruch 7, bei dem der Detektierschritt den folgenden zusätzlichen Schritt umfasst:
selektives Erkennen eines Vorliegens von Frequenzsprung-GSM-Signalen, gleichzeitiges Veranlassen eines Rücksprungs mehrerer GSM-Störer und Senden der geeigneten Frequenzsprungsequenz an das Kerbfilter (43).

16. Verfahren nach Anspruch 7, bei dem der Schritt des Ableitens eines durchschnittlichen zusammengesetzten Breitband-Leistungspegels die folgenden zusätzlichen Schritte umfasst:
Auswählen einer vorgegebenen Anzahl der stärksten Schmalband-Signalleistungspegel; und
nicht Einschließen der vorgegebenen Anzahl der stärksten Schmalband-Signalleistungspegel in eine Ableitung des durchschnittlichen zusammengesetzten Breitband-Leistungspegels.

17. Verfahren nach Anspruch 7, bei dem der Schritt des Verwendens der durchschnittlichen zusammengesetzten Breitband-Leistungspegel zum Ableiten einer Schwelle den folgenden zusätzlichen Schritt umfasst:
Hinzufügen eines vorgegebenen Offsets zum durchschnittlichen zusammengesetzten Breitband-Leistungspegel, um die Schwelle abzuleiten.

18. Verfahren nach Anspruch 7, bei dem der Schritt des schnellen Analysierens des breiten Frequenzbands den folgenden zusätzlichen Schritt umfasst:
schrittweises Verschieben eines Schmalbandempfängers über das breite Frequenzband (10) in Frequenzschrittweiten, die jeder einer Anzahl von Kanalfrequenzen zugeordnet sind, die zu Schmalbandsendern gehören, deren Betrieb innerhalb des breiten Frequenzbands (10) erwartet wird.

19. Verfahren nach Anspruch 18, bei dem die erwarteten Schmalbandsender AMPS-Mobiltelefone und die Frequenzschrittweiten 30 kHz sind.

20. Verfahren nach Anspruch 19, bei dem der Schmalbandempfänger wenigstens einen Empfangssignal-Stärkeanzeige (RSSI)-Ausgang für den Schmalbandkanal bereitstellt und bei dem die RSSI verwendet wird, um die Schmalband-Signalleistungspegel zu ermitteln.

21. Verfahren nach Anspruch 7, bei dem das Kerbfilter (43) eine Amplitudenantwortcharakteristik aufweist, die zu einer erwarteten Amplitudencharakteristik der Schmalbandstörung (21) passt.

22. Verfahren nach Anspruch 7, bei dem der Schritt des Setzens eines Kerbfilters (43) zusätzlich den folgenden Schritt umfasst:
Abwärts-Frequenzumsetzen eines Funkfrequenz(RF)-Signals, das das breite Frequenzband enthält, in ein Zwischenfrequenz (IF)-Signal, wobei die Frequenzverschiebung des Abwärts-Frequenzumsetzens von einer Funkfrequenz der Schmalbandstörung abhängt;
Filtern des IF-Signals mit einem Schmalband-Festfrequenz-Kerbfilter (43), um ein kerbgefiltertes IF-Signal zu erzeugen; und
Aufwärts-Frequenzumsetzen des kerbgefilterten IF-Signals, um ein Ausgangs-RF-Signal zu erzeugen, wobei die Frequenzverschiebung des Aufwärts-Frequenzumsetzens von der Frequenz der Schmalbandstörung abhängt, wobei das Ausgangs-RF-Signal wiederum auf eine Funkfrequenz zurückgebracht wird, die mit der ursprünglichen Funkfrequenz des breiten Frequenzbands (10) übereinstimmt.

23. Verfahren nach Anspruch 22, wobei das Schmalband-Festfrequenz-Kerbfilter (43) eine Sperrweite entsprechend einer Bandbreite eines erwarteten Schmalbandsenders aufweist, der die Schmalbandstörung verursacht.

24. Verfahren nach Anspruch 7, bei dem das breite Frequenzband (10) wenigstens ungefähr halb so breit wie die Schmalbandstörung (21) ist.

25. Verfahren nach Anspruch 7, umfassend den folgenden zusätzlichen Schritt:
Setzen mehrerer Kerbfilter (43) in einer Kaskadenanordnung, wobei ein gegebener Kerbfilter (43)-Ausgang in der Kaskade einem Eingang eines nächsten Kerbfilters (43) in der Kaskade zugeführt wird, wobei die mehreren Kerbfilter jeweils eingestellt sind, um einen vorgegebenen mehrerer jeweiliger Fälle von Schmalbandstörungen (21) zu unterdrücken.

## Revendications

1. Dispositif de suppression de l'interférence à bande étroite (21) dans un système de télécommunications à large bande, ledit système pouvant fonctionner dans une large bande de fréquence (10), comprenant :
des moyens destinés à analyser rapidement ladite large bande de fréquence (10) par rapport à des niveaux de puissance de signal dans des bandes de fréquence étroites spécifiées (21) de la large bande de fréquence et à détecter lesdits niveaux de puissance de signal à bande étroite reçus dans lesdites bandes spécifiées ;
des moyens destinés à déduire un niveau de puissance à large bande composite moyen à partir desdits niveaux de puissance de signal à bande étroite en déterminant un niveau de puissance moyen d'au moins certains desdits niveaux de puissance de signal à bande étroite ;
des moyens destinés à utiliser ledit niveau de puissance à large bande composite moyen afin de déduire un seuil adaptatif pour identifier ladite interférence à bande étroite ; et
des moyens destinés à configurer un ou plusieurs filtres coupe-bande (43) destinés à supprimer ladite interférence à bande étroite identifiée.

2. Dispositif selon la revendication 1, dans lequel ledit système à large bande est un système CDMA et lesdites bandes de fréquence spécifiées sont déterminées à partir d'un système AMPS.

3. Dispositif selon la revendication 2, dans lequel lesdits moyens d'analyse, lesdits moyens de déduction, lesdits moyens d'identification et lesdits moyens de configuration sont tous mis en oeuvre dans une même période de trame de données CDMA.

4. Dispositif selon la revendication 1, dans lequel lesdits moyens de détection sont conçus pour détecter la présence de signaux GSM à saut de fréquence et pour supprimer simultanément le saut de multiples éléments de brouillage GSM en transmettant la séquence de saut de fréquence appropriée à chacun desdits filtres coupe-bande.

5. Dispositif selon la revendication 1, dans lequel ledit filtre coupe-bande (43) comprend :
un premier mélangeur (42) ;
un oscillateur commande en tension (41) ;
un filtre à fréquence fixe à bande étroite (44) ; et
un second mélangeur (45),
dans lequel ledit premier mélangeur (42) et ledit oscillateur commandé en tension (41) hétérodynent un signal de fréquence radio en un signal de fréquence intermédiaire, ledit signal de fréquence intermédiaire subissant alors un filtrage par filtre coupe-bande et par filtre passe-bande, ledit second mélangeur (45) reconvertissant ledit signal filtré en dite fréquence radio.

6. Dispositif selon la revendication 5, dans lequel ledit filtre coupe-bande (43) est contourné à l'aide d'un circuit de commutation à fréquence radio (51) lorsqu'aucun élément de brouillage n'est détecté, ledit circuit de commutation (51) comportant un seuil de commutation qui est supérieur pour commuter le filtre coupe-bande (43) que pour contourner le filtre coupe-bande (43).

7. Procédé de suppression d'interférence à bande étroite (21) dans un système de télécommunications à large bande, ledit système pouvant fonctionner dans une large bande de fréquence (10), le procédé comprenant les étapes consistant à :
analyser rapidement ladite large bande de fréquence (10) par rapport à des niveaux de puissance de signal dans des bandes de fréquence étroites spécifiées (21) de la large bande de fréquence et détecter lesdits niveaux de puissance de signal à bande étroite reçus dans lesdites bandes spécifiées ;
déduire un niveau de puissance à large bande composite moyen à partir desdits niveaux de puissance de signal à bande étroite en déterminant un niveau de puissance moyen d'au moins certains desdits niveaux de puissance de signal à bande étroite ;
utiliser lesdits niveaux de puissance à large bande composites moyens afin de déduire un seuil pour identifier ladite interférence à bande étroite ; et
configurer un filtre coupe-bande (43) pour supprimer ladite interférence à bande étroite identifiée.

8. Procédé selon la revendication 7, dans lequel ledit système à large bande est un système CDMA.

9. Procédé selon la revendication 8, dans lequel ladite étape d'analyse, ladite étape de déduction, ladite étape d'identification et ladite étape de configuration sont toutes mises en oeuvre dans une période de délai de trame acceptable maximale CDMA.

10. Procédé selon la revendication 7, dans lequel ledit système à large bande est un système à spectre étalé.

11. Procédé selon la revendication 10, dans lequel ledit système à large bande est un système de réseau local sans fil.

12. Procédé selon la revendication 10, dans lequel ledit système à large bande est un système de type service de distribution multipoint local.

13. Procédé selon la revendication 7, dans lequel lesdites bandes de fréquence spécifiées sont déterminées à partir d'un système AMPS.

14. Procédé selon la revendication 7, dans lequel lesdites bandes de fréquence spécifiées sont déterminées à partir d'un système TACS.

15. Procédé selon la revendication 7, dans lequel ladite étape de détection comprend l'étape supplémentaire consistant à :
détecter sélectivement une présence de signaux GSM à saut de fréquence et supprimer simultanément le saut de multiples éléments de brouillage GSM, et transmettre la séquence de saut de fréquence appropriée audit filtre coupe-bande (43).

16. Procédé selon la revendication 7, dans lequel l'étape de dérivation d'un niveau de puissance à large bande composite moyen comprend les étapes supplémentaires consistant à :
sélectionner un nombre prédéfini des niveaux de puissance de signal à bande étroite les plus forts ; et
ne pas inclure ledit nombre prédéfini des niveaux de puissance de signal à bande étroite les plus forts dans une dérivation du niveau de puissance à large bande composite moyen.

17. Procédé selon la revendication 7, dans lequel l'étape d'utilisation desdits niveaux de puissance à large bande composites moyens pour dériver un seuil comprend l'étape supplémentaire consistant à :
ajouter un décalage prédéfini au niveau de puissance à large bande composite moyen pour dériver le seuil.

18. Procédé selon la revendication 7, dans lequel l'étape d'analyse rapide de ladite large bande de fréquence comprend l'étape supplémentaire consistant à :
échelonner un récepteur à bande étroite sur la large bande de fréquence (10) en incréments de fréquence associés à chacune des fréquences de canal associées à des émetteurs à bande étroite prévus pour fonctionner dans la large bande de fréquence (10).

19. Procédé selon la revendication 18, dans lequel les émetteurs à bande étroite prévus sont des téléphones cellulaires AMPS et les incréments de fréquence sont de 30 kHz.

20. Procédé selon la revendication 19, dans lequel le récepteur à bande étroite fournit au moins une sortie d'indication de force de signal de réception (RSSI) pour le canal à bande étroite, et la RSSI est utilisée pour déterminer les niveaux de puissance de signal à bande étroite.

21. Procédé selon la revendication 7, dans lequel le filtre coupe-bande (43) a une caractéristique de réponse en amplitude qui correspond à une caractéristique d'amplitude prévue de l'interférence à bande étroite (21).

22. Procédé selon la revendication 7, dans lequel l'étape de configuration d'un filtre coupe-bande (43) comprend en plus les étapes consistant à :
convertir à la baisse un signal de fréquence radio (RF) contenant la large bande de fréquence en un signal de fréquence intermédiaire (IF), le déplacement de fréquence de la conversion à la baisse dépendant d'une fréquence radio de ladite interférence à bande étroite ;
filtrer ledit signal IF à l'aide d'un filtre coupe-bande à fréquence fixe à bande étroite (43), pour produire un signal IF filtré à l'aide d'un filtre coupe-bande ; et
convertir à la hausse ledit signal IF filtré par le filtre coupe-bande pour produire un signal RF de sortie, le déplacement de fréquence de la conversion à la hausse dépendant de ladite fréquence de ladite interférence à bande étroite, le signal RF de sortie revenant à une fréquence radio coïncidant à nouveau avec ladite fréquence radio d'origine de ladite large bande de fréquence (10).

23. Procédé selon la revendication 22, dans lequel ledit filtre coupe-bande à fréquence fixe à bande étroite (43) a une largeur de réjection correspondant à une largeur de bande d'un émetteur à bande étroite prévu qui entraîne l'interférence à bande étroite.

24. Procédé selon la revendication 7, dans lequel la large bande de fréquence (10) fait au moins environ la moitié de la largeur de l'interférence à bande étroite (21).

25. Procédé selon la revendication 7, comprenant l'étape supplémentaire consistant à :
configurer de multiples filtres coupe-bande (43) selon un agencement en cascade, où une sortie de filtre coupe-bande donné (43) dans la cascade alimente une entrée d'un filtre coupe-bande (43) suivant dans la cascade, les multiples filtres coupe-bande étant chacun réglés pour supprimer un cas donné parmi de multiples cas d'interférence à bande étroite (21) correspondants.
